**Europäisches Patentamt**

**European Patent Office**

**Office européen des brevets**

(19)

(11) Veröffentlichungsnummer: **0 110 137**
**B1**

(12) **EUROPÄISCHE PATENTSCHRIFT**

(45) Veröffentlichungstag der Patentschrift:
**07.01.88**

(51) Int. Cl.⁴: **B 41 F 21/00**, B 41 F 13/00

(21) Anmeldenummer: **83110719.8**

(22) Anmeldetag: **26.10.83**

(54) **Schaltvorrichtung zur wahlweisen Umsetzung einer kontinuierlichen Drehbewegung in eine singuläre, drehwinkelbezogene Schwenkbewegung eines Schalthebels.**

(30) Priorität: **26.10.82 DE 3239579**

(43) Veröffentlichungstag der Anmeldung:
**13.06.84 Patentblatt 84/24**

(45) Bekanntmachung des Hinweises auf die Patenterteilung:
**07.01.88 Patentblatt 88/1**

(84) Benannte Vertragsstaaten:
**AT BE CH DE FR GB IT LI LU NL SE**

(56) Entgegenhaltungen:
**CH - A - 469 617**
**DE - B - 1 278 212**

**IBM TECHNICAL DISCLOSURE BULLETIN, vol.9, no.9, Februar 1967; L.H. COZAD: "Selective Oscillation Mechanism"**

(73) Patentinhaber: **Neue Rotaprint GmbH, Reinickendorfer Strasse 46, 1000 Berlin 65 (DE)**

(72) Erfinder: **Jähme, Hans Joachim, Eckernfördestrasse 1, D-6200 Wiesbaden (DE)**

(74) Vertreter: **Weiland, Elisabeth et al, Dr. Weiland und Partner Rechtsanwälte Neuer Wall 86 Postfach 30 58 47, D-2000 Hamburg 36 (DE)**

## Beschreibung

Die vorliegende Erfindung betrifft eine Schaltvorrichtung nach dem Oberbegriff des Patentanspruches 1. Eine derartige Schaltvorrichtung ist aus der CH-A-469 617 bekannt. Sie kann beispielsweise eingesetzt werden, um bei einer schnelllaufenden Offset-Druckmaschine die Weiche zur Entnahme eines Kontroll- oder Probebogens kurzfristig zu betätigen, was zu einem ganz bestimmten Zeitpunkt des Maschinentaktes geschehen muss.

Eine Schaltvorrichtung zur einmaligen, drehwinkelbezogenen Betätigung eines Schalthebels nach einer zu einem beliebigen Zeitpunkt erfolgenden Aktivierung der Vorrichtung, und zwar zu einem genau definierten Zeitpunkt des Maschinentaktes, kann für verschiedene Anwendungsfälle von Nutzen sein, so beispielsweise wie angedeutet für eine Weiche zur Probe- oder Kontrollbogenentnahme bei einer Druckmaschine. Eine solche Weiche könnte zwar mit einer magnetbetätigten Hebelvorrichtung betrieben werden, wobei der Zeitpunkt der Betätigung etwa von einer in geeigneter Weise plazierten Lichtschranke ausgelöst würde, doch hat es sich gezeigt, dass wenn nur sehr kurze Zeiten für eine solche Betätigung zur Verfügung stehen, eine magnetische Betätigung unzuverlässig wird, weil es zu Schwierigkeiten u.a. bei der Ansprechgeschwindigkeit des Elektromagneten kommt. Dies ist bei Druckmaschinen beispielsweise dann der Fall, wenn bis zu 36 000 Bogen pro Stunde gedruckt werden und zur Kontrolle des Druckergebnisses zu beliebigen Zeiten jeweils nur ein Probebogen entnommen werden soll.

Es ist daher die der vorliegenden Erfindung zugrundeliegende Aufgabe, eine Schaltvorrichtung vorzusehen, die von einer kontinuierlichen Drehbewegung einer Maschine abgeleitet zu einem genau definierten Zeitpunkt des Maschinentaktes eine einmalige Schaltbewegung mit sofortiger Rückstellung in den Ausgangszustand bewirkt, und zwar unabhängig vom Zeitpunkt der Aktivierung der Schaltvorrichtung.

Diese Aufgabe wird erfindungsgemäss durch die Merkmale des Hauptanspruches gelöst. Die Antriebsverbindung zwischen dem eine dauernde Nickbewegung durchführenden Mitnehmerhebel und dem Schalthebel wird durch ein bistabiles Kippsprungwerk vorübergehend hergestellt, und zwar nur für die Dauer eines Maschinentaktes oder einer vollständigen Schwingung des Mitnehmerhebels. Das bistabile Kippsprungwerk kann nach seiner Aktivierung erst dann vor den hin- und herschwingenden Mitnehmerhebel einfallen, wenn dieser sich in seiner einen Totpunktlage, d.h. der Ausgangslage befindet, und die daraufhin erfolgende Mitnahme des Schalthebels stellt über einen am Maschinengestell gelagerten Rückstellhebel das bistabile Kippsprungwerk sofort in die Ausgangslage zurück, so dass der in Richtung auf den Mitnehmerhebel federbeaufschlagte Schalthebel unmittelbar nach Vollendung einer Schwenkbewegung sofort wieder die Antriebsverbindung zum Mitnehmerhebel verliert, d.h. inaktiviert wird, da das Kippsprungwerk wieder in seine Ausgangslage zurückspringt, in der der Mitnehmerhebel frei durchschwingt, ohne den Schalthebel zu betätigen.

Da das Kippsprungwerk nur in einer ganz bestimmten Lage des Mitnehmerhebels, nämlich in dessen einer Totpunktlage vor den Mitnehmerhebel einfallen kann, ist stets eine genau definierte Winkelbeziehung zwischen dem Maschinentakt und der Schwenkbewegung des Schalthebels gegeben.

Durch eine geeignete Hebelübersetzung kann eine relativ geringfügige Bewegung des Schalthebels auf einen für den jeweiligen Anwendungsfall ausreichenden Betrag verstärkt werden.

Eine Ausführungsform der erfindungsgemässen Schaltvorrichtung wird anhand der beigefügten Figuren beschrieben. In diesen zeigt die

Fig. 1 eine Ansicht der Schaltvorrichtung;

Fig. 2 eine Schnittansicht derselben Schaltvorrichtung; und

Fig. 3 ein Detail aus Fig. 1, welches dort der Übersichtlichkeit wegen nicht eingezeichnet ist.

Auf einem am Maschinengestell 10 vorgesehenen Lagerzapfen 12 ist ein Mitnehmer(hebel) 7 schwenkbar gelagert, welcher von der Maschine her kontinuierlich angetrieben wird, und zwar derart, dass er im Maschinentakt eine kontinuierliche Nick- oder Schwenkbewegung durchführt, wie durch den Doppelpfeil D angedeutet wird. Dies kann beispielsweise durch einen nicht gezeigten Exzenterantrieb geschehen.

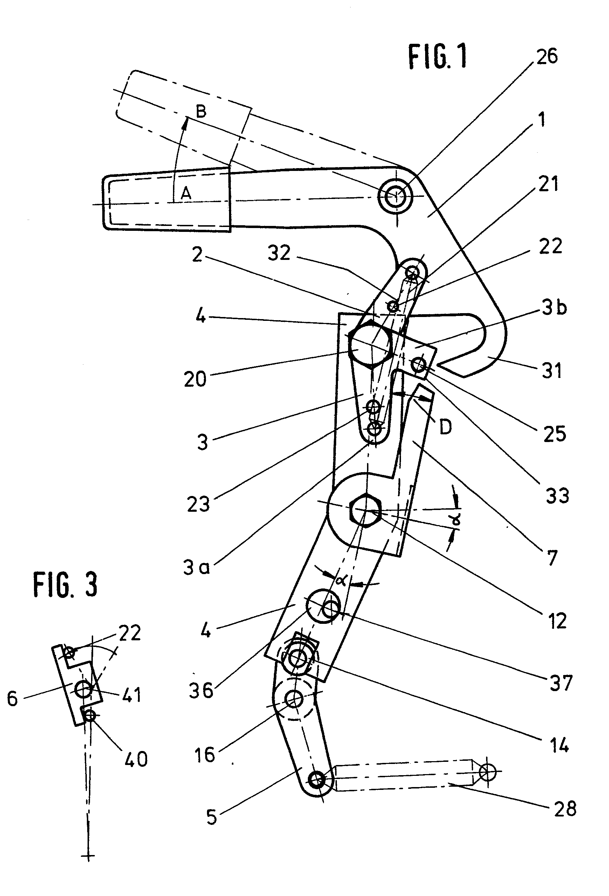

Um die erwähnte einmalige Schwenkbewegung des Schalthebels 4 zu überzeugen, die in der Zeichnung durch den Winkel α angedeutet ist, ist am Schalthebel 4 eine besondere, federvorgespannte Hebelvorrichtung (Kippsprungwerk) aus einem Spannhebel 2 und einer Schaltklinke 3 gelagert, die im übrigen noch mit einem am Maschinengestell 10 gelagerten weiteren Rückstellhebel 6 zusammenwirkt. Durch die Ausbildung dieser Hebelanordnung im Zusammenwirken mit dem Auslösehebel 1 wird erreicht, dass die Anlagefläche 33 der Schaltklinke 3 einen Maschinentakt lang und zu einem ganz bestimmten Zeitpunkt des Maschinentaktes radial in die Bewegungsbahn des Mitnehmerhebels 7 einschwenkt und somit der Schalthebel 4 der kontinuierlichen Bewegung des Mitnehmerhebels ein einziges Mal in Fig. 1 nach links folgt, um anschliessend von der Rückstellfeder 28 zurückgedrückt zu werden.

Die die genannte einmalige Schwenkbewegung erzeugende Hebelmechanik wird im nachfolgenden genauer erläutert. An dem einen (in der Fig. 1 oberen), von dem Lagerzapfen 12 abgewandten Ende des Schalthebels 4 sitzt ein Lagerstift 20, um den sowohl der Spannhebel 2 als auch die Schaltklinke 3 in beschränktem Masse verschwenkbar sind, wie noch näher darzustellen sein wird. Die voneinander abgewandten Enden des Spannhebels 2 und der Schaltklinke 3 sind mittels einer vorgespannten Feder 21 verbunden, so dass die beiden voneinander abgewandten Enden des Spannhebels und der Schaltklinke aufeinander zu beaufschlagt sind. Der Spannhebel 2 ist etwa mittig zwischen seiner Schwenkachse (Lagerstift 20) und dem Verankerungspunkt für die Spannfeder 21 mit einem Spannhebelstift 22 versehen, der gerade über das stirnseitige Ende des Schalthebels 4 hinausragt; die beiderseits der Längsmittelachse des (oberen Teils des) Schalthebels 4 erfolgende Schwenkbewegung des Spannhebels 2 wird dadurch begrenzt, dass eben dieser Spannhebelstift 22 jeweils in seinen beiden Endlagen auf der Stirnseite des Schalthebels 4 aufliegt.

Die Verschwenkbarkeit der Schaltklinke 3 ist in ähnlicher Weise begrenzt, und zwar dadurch, dass ein Schaltklinkenstift 23 im Hauptabschnitt 3a der Schaltklinke zwischen dem Lagerstift 20 und dem Angriffspunkt der Spannfeder 21 angeordnet ist und in eine vergrösserte Bohrung 24 im Schalthebel 4 eingreift. Entsprechend der Grösse dieser Bohrung 24 im Verhältnis zum Durchmesser des Schaltklinkenstiftes 23 ist die Schaltklinke 3 um den Lagerstift 20 beschränkt verschwenkbar. Die Schaltklinke 3 ist, wie aus der Zeichnung ersichtlich, abgewinkelt, d.h. sie besteht aus einem Hauptabschnitt 3a, der sich zwischen dem Lagerstift 20 und der Verankerung für die Spannfeder 21 erstreckt, und aus einem im Winkel dazu angeordneten Schaltklinkenansatz 3b, welcher die bereits erwähnte Anlagefläche 33 der Schaltklinke trägt. Die vorerwähnte Bohrung 24, in die der Schaltklinkenstift 23 mit einem gewissen Spiel eingreift, ist so bemessen, dass eine Verschwenkung der Schaltklinke 3 in die Bahn des Mitnehmers 7 möglich wird.

Der Ansatz 3b der als Winkelhebel ausgeführten Schaltklinke 3 trägt an seinem vom Lagerstift 20 abgewandten Ende einen Arretierstift 25, welcher zum zeitweisen Festhalten der Schaltklinke 3 in der gezeichneten Ausgangsstellung dient, d.h. in derjenigen Stellung, in der der Mitnehmerhebel 7 den Schalthebel 4 über die Schaltklinke 3 nicht betätigen kann.

Um die Schaltklinke 3 aus einem noch zu erläuternden Grunde in der gezeigten Stellung mittels des Arretierstiftes 25 festlegen zu können, ist ein mit einem hakenförmigen Ende versehener Auslösehebel 1 auf einem Schwenkzapfen 26 gelagert, der am Maschinengestell 10 vorgesehen ist. Durch Verschwenken des Auslösehebels 1 in Richtung des Pfeils AB untergreift die zum Schwenkzapfen 26 konzentrische Innenfläche des hakenförmigen Endes 31 den Arretierstift 25, so dass die Schaltklinke 3 sich vorerst aus der gezeichneten Lage nicht lösen kann, und zwar gleichgültig was mit dem Spannhebel 2 geschieht, mit dem die Schaltklinke 3 über die Spannfeder 21 elastisch verbunden ist.

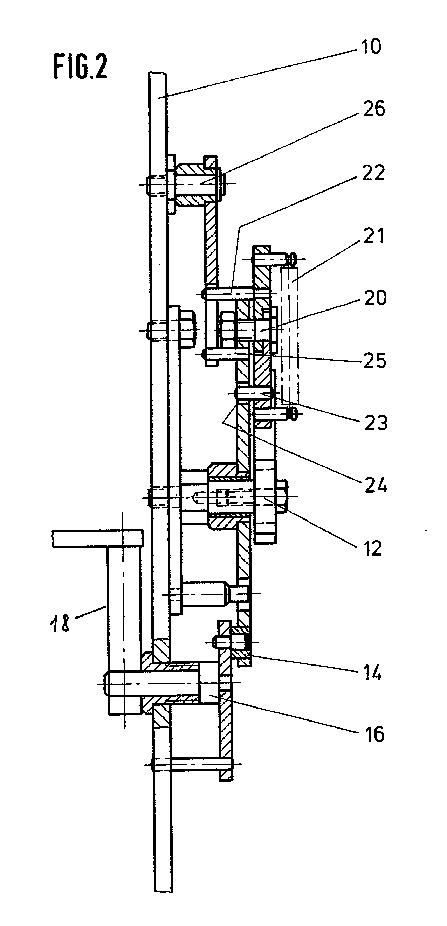

Wie in Fig. 2 gezeigt ist, ragt der Spannhebelstift 22 über die Stirnfläche des Schalthebels 4 so weit hinaus, dass er in die Schwenkebene des Auslösehebels 1 hineinragt. Wie aus Fig. 1 ersichtlich, weist der Auslösehebel 1 eine etwa radial zum Schwenkzapfen 26 verlaufende Betätigungsfläche 32 auf, die beim Verschwenken des Auslösehebels im Sinne des Pfeils AB den Spannhebelstift 22 in Fig. 1 nach links verschiebt derart, dass der Verankerungspunkt der Spannfeder 21 links von der Längsmittelachse des (oberen Teils) Schalthebels 4 zu liegen kommt, so dass aufgrund der Zugspannung der Spannfeder 21 ein rechtsdrehendes Moment auf die Schaltklinke 3 ausgeübt wird. Diese Schaltklinke 3 kann jedoch diesem rechtsdrehenden Moment zunächst nicht folgen, weil der Arretierstift 25 auf der Innenfläche des hakenförmigen Endes des Auslösehebels 1 aufliegt. Dies bedeutet, dass auch jetzt noch nicht ein Verschwenken des Schalthebels 4 erfolgt. Erst durch ein anschliessendes Zurückschwenken des Auslösehebels 1 entgegen dem Pfeil AB wird die Schaltklinke 3 grundsätzlich in die Lage versetzt, dem durch die Spannfeder 21 erzeugten rechtsdrehenden Moment zu folgen und sich mit der Auflagefläche 33 vor den hin- und herschwingenden Mitnehmer 7 zu legen. Tatsächlich ist dieses Einschwenken in die Bahn des Mitnehmers 7 auch in diesem Schaltzustand nur zu einem ganz bestimmten Zeitpunkt möglich, nämlich dann, wenn der Mitnehmer 7 in der Nähe des rechten Totpunktes der Schwingbewegung gemäss Doppelpfeil D ist, weil der Ansatz 3b der Schaltklinke sonst auf der oberen Stirnfläche des Mitnehmers 7 aufliegt. Mit anderen Worten kann die Schaltklinke erst dann vor den Mitnehmer 7 einfallen, wenn sowohl der Auslösehebel 1 in seine Ausgangsstellung A gemäss Pfeil AB zurückgeschwenkt worden ist, als auch der Mitnehmer 7 die hintere Totpunktlage erreicht hat. Bei dem anschliessenden Vorwärtsschwenk (in Fig. 1 nach links) gemäss Doppelpfeil D drückt der Mitnehmer 7 den Schalthebel 4 nach links, indem er sich über die Schaltklinke 3 abstützt, so dass auf diese Weise die Weiche 18 über den unteren Teil des Schalthebels 4 und den Übertragungshebel 5 veschwenkt wird, der im Prinzip nur eine Hebelübersetzung zur Vergrösserung des Schwenkwinkels darstellt.

Beim anschliessenden Zurückschwenken des Mitnehmers 7 (in Fig. 1 nach rechts) folgt der Schalthebel 4 mit der darauf gelagerten Hebelanordnung aus Spannhebel 2 und Schaltklinke 3 aufgrund der Kraft der Rückstellfeder 28, die am Übertragungshebel 5 angreift.

Im unteren Teil des Schalthebels 4 ist eine dessen Schwenkhub begrenzende Bohrung 36 vorgesehen, in die ein am Maschinengestell gelagerter, einen wesentlich kleineren Durchmesser aufweisender Hubbegrenzungsstift 37 eingreift, der in geeigneter Weise. z.B. durch eine exzentrische Lagerung. verstellbar ist. um die Schwenkwinkel des Schalthebels 4 verlagern zu können. Diese Hubbegrenzung dient auch dazu. die kraftschlüssige Verbindung zwischen der Auflagefläche 33 der Schaltklinke 3 und der Vorderseite des Mitnehmers 7 in der Nähe des rechten Totpunktes der Schwenkbewegung gemäss Doppelpfeil D aufzuheben. damit die Schaltklinke 3 in noch zu beschreibender Weise in ihre gezeichnete Ausgangsstellung (entgegen dem Uhrzeigersinn) zurückgeschwenkt werden kann und somit dem Mitnehmerhebel 7 die Möglichkeit zu geben. wieder frei durchzuschwingen.

Um diese Rückstellung der Schaltklinke zu bewirken. muss der Spannhebel 2 im Verlaufe der einmaligen Schwenkbewegung des Schalthebels 4 in seine gezeichnete Ausgangslage (in Fig. 1 nach rechts geneigt) zurückgedrückt werden. Dies geschieht mit Hilfe eines zwischen Maschinengestell 10 und dem Schalthebel 4 angeordneten, auf einem am Maschinengestell 10 befestigten Lagerzapfen 41 gelagerten doppelarmigen Rückstellhebels 6, dessen eine Ende von einem am Schalthebel 4 vorgesehenen Rückstellstift 40 verschwenkt wird derart, dass das entgegengesetzte andere Ende des Rückstellhebels 6 den Spannhebelstift 22 in seine Ausgangslage zurückdrückt – vgl. die Ansicht der Fig. 3. Der Rückstellhebel 6 der Fig. 3 ist aus Gründen der Übersichtlichkeit in Fig. 1 oder 2 nicht gezeigt – ebensowenig der Rückstellstift 40. Der Lagerzapfen 41 für den Rückstellhebel 6 ist jedoch in Fig. 2 angedeutet.

Die in Fig. 1 in ihrer Ausgangsstellung gezeigte Vorrichtung kann also von der kontinuierlich erfolgenden Nickbewegung des Mitnehmers 7 zu einem genau definierten Zeitpunkt eine einzige Schwenkbewegung ableiten, und zwar ohne dass der Zeitpunkt der Aktivierung der Vorrichtung irgendeinen Einfluss ausübt auf den Beginn und den Ablauf der einmaligen Schwenkbewegung. Dies geschieht in der folgenden Weise (ausgehend von der in Fig. 1 dargestellten Ruhestellung). Zunächst wird der Auslösehebel 1 aus der Position A in die Position B geschwenkt, wie durch den Pfeil AB angedeutet ist. Dadurch fährt das hakenförmige Ende des Auslösehebels 1 unter den Arretierstift 25, so dass die damit verbundene Schaltklinke 3 nicht in die Bahn des Mitnehmers einfallen kann. Gleichzeitig mit der Verschwenkung des Auslösehebels 1 von A nach B schiebt der Auslösehebel mit seiner Betätigungsfläche 32 den Spannhebelstift 22 des Spannhebels 2 in die zur Längsmittelachse des Schalthebels 4 spiegelbildliche Extremlage, so dass die Spannfeder 21 die Schaltklinke 3 in die Bahn des Mitnehmers 7 zu ziehen sucht, was aber wegen des Zusammenwirkens des Arretierstiftes 25 mit dem hakenförmigen Ende des Auslöserhebels 1 vorerst nicht möglich ist. Erst wenn der Arretierhebel wieder in seine Ausgangslage zurückgeführt wird, wird die Schaltklinke 3 freigegeben, die aber erst dann in die Bahn des Mitnehmers 7 einfallen kann, wenn dieser seine rechte Totpunktslage erreicht hat; dies bedeutet also, dass unabhängig vom Zeitpunkt des Ein- und Ausschwenkens des Auslösehebels 1 die Antriebsverbindung zwischen der Schaltklinke 3 und dem Mitnehmer 7 immer zum gleichen Zeitpunkt im Verhältnis zum Maschinentakt hergestellt wird. Damit kann der Schalthebel 4 der Bewegung des Mitnehmers folgen, d.h. letzterer drückt den Schalthebel 4 in Fig. 1 nach links, und zwar entgegen der Kraft der Rückstellfeder 28. Das Verschwenken des Schalthebels 4 im Uhrzeigergegensinn lässt gleichzeitig den Rückstellstift 40, der auf der vom Betrachter der Fig. 1 abgewandten Seite fest mit dem Schalthebel 4 verbunden ist, eine entsprechende Schwenkbewegung durchführen, nämlich er wandert (in Fig. 3 gesehen) nach links und drückt den Rückstellhebel 6, welcher auf dem Lagerzapfen 41 an dem Maschinengestell 10 befestigt ist, im Uhrzeigersinn, so dass das andere Ende des Rückstellhebels 6 den Spannhebelstift 22 und damit die Spannhebel 2 wieder (in Fig. 1) nach rechts drückt. Wegen der Spannfeder 21 entsteht also aufgrund des Verschwenkens des Schalthebels 4 und der Wirkung des Rückstellhebels 6 sogleich ein linksdrehendes Moment an der Schaltklinke 3, die sich sofort wieder aus der Bahn des Mitnehmers 7 herausbewegt, wenn die Hubbegrenzung 36, 37 in der Nähe des rechten Totpunktes des Mitnehmers 7 die kraftschlüssige Verbindung zwischen dem Mitnehmer und der Anlagefläche 33 der Schaltklinke aufhebt.

## Patentansprüche

1. Schaltvorrichtung zur wahlweisen Umsetzung einer kontinuierlichen Drehbewegung einer Maschine, zum Beispiel einer schnellaufenden Druckmaschine, in eine singuläre, drehwinkelbezogene Schwenkbewegung eines Schalthebels, wobei ein auf einem Lagerzapfen (12) gelagerter Mitnehmerhebel (7) etwa über einen Exzentertrieb mit der kontinuierlichen Drehbewegung der Maschine zur Erzeugung einer kontinuierlichen Nickbewegung gekoppelt ist, dadurch gekennzeichnet,

dass ein Schalthebel (4) auf dem gleichen Lagerzapfen (12) gelagert ist und ein bistabiles Kippsprungwerk (Spannhebel 2, Schaltklinke 3, Spannfeder 21) trägt, welches in der ersten stabilen Lage den Mitnehmerhebel (7) frei durchschwingen lässt und bei in einen Totpunkt ausgeschwenktem Mitnehmerhebel (7) in die zweite stabile Lage einfallen kann, in der dem Mitnehmerhebel im Bereich seiner Schwenkbewegung eine Anlagefläche (33) dargeboten wird,

dass der Schalthebel (4) in Richtung auf den Mitnehmerhebel (7) federbeaufschlagt ist (Rückstellfeder 28), und

dass die Schaltbewegung des Schalthebels (4) mittels eines Rückstellhebels (6) das Kippsprungwerk (2, 3, 21) in die erste stabile Lage zurückstellt.

2. Schaltvorrichtung nach Anspruch 1, dadurch gekennzeichnet, dass das Kippsprungwerk aus zwei auf einem gemeinsamen Lagerstift (20) gelagerten einarmigen Hebel (Spannhebel 2 und Hauptabschnitt 3a der Schaltklinke 3) besteht, deren voneinander abgewandte Enden mittels einer Spannfeder 21 aufeinander zu beaufschlagt sind und deren Verschwenkbarkeit beiderseits der Mittellängsachse des Schalthebels (4) durch Anschlagstifte (Spannhebelstift 22, Schaltklinkenstift 23) begrenzt ist, und dass die Schaltklinke (3) einen seitwärts in Richtung zum Mitnehmerhebel (7) vorspringenden Ansatz (3b) aufweist, der in der ersten stabilen Lage des Kippsprungwerkes sich gerade radial ausserhalb der Schwenkbewegung des Mitnehmerhebels (7) befindet.

3. Schaltvorrichtung nach Anspruch 1 oder 2, dadurch gekennzeichnet, dass mittels eines Auslösehebels (1) der Spannhebel (2) über den Spannhebelstift (22) in die Position der zweiten stabilen Lage bewegbar ist, und dass der Auslösehebel ein hakenförmiges Ende (31) aufweist, welches die Schaltklinke (3) gleichzeitig in der Position der ersten stabilen Lage festhält, bis der Auslösehebel in seine Ausgangslage zurückgeschwenkt wird.

4. Schaltvorrichtung nach einem der voranstehenden Ansprüche, dadurch gekennzeichnet, dass der Ansatz (3b) der Schaltklinke (3) in der Ebene der Schwenkbewegung des Mitnehmerhebels (7) so angeordnet ist, dass er auf der oberen Stirnfläche des Mitnehmerhebels abstützend nur in der hinteren Totpunktlage desselben vor diesen einfallen kann.

5. Schaltvorrichtung nach einem der voranstehenden Ansprüche, dadurch gekennzeichnet, dass der Schalthebel (4) mit einer Hubbegrenzung versehen ist, die aus einem Stift (37) besteht, welcher in eine entsprechend grösser dimensionierte Bohrung (38) im Schalthebel (4) eingreift.

6. Schaltvorrichtung nach einem der voranstehenden Ansprüche, dadurch gekennzeichnet, dass die Schwenkbewegung des Schalthebels (4) über eine geeignete Hebelanordnung (Übertragungshebel 5 mit Kulissenführung 14) verstärkt wird.

7. Schaltvorrichtung nach einem der voranstehenden Ansprüche, dadurch gekennzeichnet, dass die Schaltvorrichtung an einer schnelllaufenden Offset-Druckmaschine vorgesehen ist zur Betätigung einer Weiche (18) zur Entnahme eines Kontroll- oder Probebogens.

## Claims

1. Control device for selectively converting a continuous rotary motion, e.g. of a high-speed printing machine, into a singular rotation-related pivoting motion of a control lever, including coupling means, such as an eccentric drive, for coupling a driving lever (7) supported on a bearing journal (12) with the continuously rotating machine so as to cause a continuous rocking motion,
wherein on the same journal (12), a control lever (4) is supported that carries a bistable over-center rocker device (tension lever 2, pawl 3, tension spring 21) which in a first stable position will allow the driving lever (7) to freely swing and which will assume the second stable position as the driving lever (7) is swung out in a dead center, an engaging face (33) being offered to the driving lever within the range of its pivoting motion,
wherein the control lever (4) is spring-biassed (return spring 28) towards the driving lever (7) and
wherein the over-center rocker device (2, 3, 21) is adapted to be returned to its first stable position by means of a return lever (6) actuated by the control lever (4).

2. Control device according to claim 1, wherein the over-center rocker device consists of two single-armed levers (tension lever 2 and main portion 3a of pawl 3) which are mounted on a common spindle (20), which have opposite ends biased towards each other by a tension spring (21) and the pivotal angle of which relative to the longitudinal middle axis of the control lever (4) is limited by stopping pins (tension lever pin 22, pawl pin 23), and wherein the pawl (3) includes an extension (3b) protruding sideways in the direction of the driving lever, which extension is in the first stable position of the over-center rocking device radially just outside the pivotal range of the driving lever (7).

3. Control device according to claim 1 or 2, wherein the tension lever (2) is adapted to be moved via the tension lever pin (22) into the second stable position by means of a tripping lever (1) and wherein the tripping lever includes a hook-shaped end (31) which simultaneously holds the pawl (3) in the first stable position until the tripping lever is returned to its starting position.

4. Control device according to any one of the preceding claims, wherein the extension (3b) of the pawl (3) is arranged in the plane of the pivotal movement of the driving lever (7) such that as it engages the upper surface of the driving lever, it will latch in front of the latter only in the rear dead center position thereof.

5. Control device according to any one of the preceding claims, wherein the control lever (4) is provided with stroke limiting means comprising a pin (37) which engages a bore (38) of appropriately larger size in the control lever (4).

6. Control device according to any one of the preceding claims, wherein the pivotal movement of the control lever (4) is boosted by a suitable lever mechanism (transfer lever 5 with connecting link 14).

7. Control device according to any one of the preceding claims, wherein the control device is associated to a high-speed offset printing machine for activating a switch (18) so as to permit withdrawing a control or specimen sheet.

## Revendications

1. Dispositif de commutation pour la transformation optionnelle d'un mouvement rotatif continuel d'une machine, par exemple d'une machine à imprimer à grande vitesse, en un mouvement pivotant singulier, en fonction de l'angle de rotation, d'un levier de commande où
un levier pivotant du commutateur (17), logé sur un tourillon (12), est accouplé, par exemple moyennant un excentrique, au mouvement rotatif continuel de la machine, pour créer un mouvement basculant continuel, caractérisé en ce qu'un levier de commande (4) est logé sur le même tourillon (12) et porte un mécanisme basculant à ressort bistable (levier tendeur 2, cliquet 3, ressort tendeur 21), lequel, dans la première position stable laisse osciller librement le levier pivotant du commutateur (7) et qui, auprès d'un levier pivotant du commutateur (7) pivoté dans un point mort, peut s'engager dans la deuxième position stable, où le levier pivotant rencontre une surface d'appui (33) à l'intérieur du rayon de son mouvement pivotant, en ce que le levier de commande (4) est actionné par un ressort (ressort de rappel 28) dans la direction du levier pivotant du commutateur (7), et en ce que le mouvement de manœuvre du levier de commande (4) remet, moyennant un levier de rappel (6), le mécanisme basculant à ressort (2, 3, 21) dans la première position stable.

2. Dispositif de commutation selon la revendication 1, caractérisé en ce que le mécanisme basculant à ressort est composé de deux leviers à bras unique, logés sur la même cheville de support (20) (levier tendeur 2 et section principale 3a du cliquet 3), dont les bouts opposés sont actionnés l'un vers l'autre moyennant un ressort tendeur (21), et dont le pivotement est limité, des deux côtés de l'axe longitudinal central du levier de commande, par des chevilles d'arrêt (cheville du levier tendeur 22, cheville du cliquet 23) et en ce que le cliquet (3) présente une saillie latérale (3b) dirigée vers le levier pivotant du commutateur (7), laquelle, dans la première position stable du mécanisme basculant à ressort, se trouve juste radialement à l'extérieur du mouvement pivotant du levier (7).

3. Dispositif de commutation selon la revendication 1 ou 2, caractérisé en ce que, à l'aide d'un levier de déclenchement (1), le levier tendeur (2) peut être déplacé, à travers la cheville du levier tendeur (22), dans la deuxième position stable, et en ce que le levier de déclenchement présente un bout en forme de crochet (31), qui sert à fixer le cliquet (3) simultanément dans la première position stable, jusqu'à ce que le levier de déclenchement soit pivoté en arrière dans sa position de départ.

4. Dispositif de commutation selon une des revendications précédentes, caractérisé en ce que la saillie (3b) du cliquet (3) est disposée sur le plan du mouvement pivotant du levier pivotant du commutateur (7) de façon que, s'appuyant sur la face supérieure du levier du commutateur, elle ne peut s'engager devant ce dernier que dans la position de point mort arrière de celui-ci.

5. Dispositif de commutation selon une des revendications précédentes, caractérisé en ce que le levier de commande (4) est muni d'un limiteur de course constitué d'une cheville (37), qui s'engage dans une forure (38) à dimensions convenablement plus grandes, disposée au levier de commande 4.

6. Dispositif de commutation selon une des revendications précédentes, caractérisé en ce que le mouvement pivotant du levier de commande (4) est renforcé moyennant une configuration de leviers appropriée (levier de transmission 5 avec guide à coulisse 14).

7. Dispositif de commutation selon une des revendications précédentes, caractérisé en ce que le dispositif de commutation est prévu sur une machine offset à grande vitesse pour commander une aiguille (18) en vue du prélèvement d'une feuille de contrôle ou d'épreuve.

FIG. 1

FIG. 3

FIG.2